# EUROPÄISCHE PATENTSCHRIFT

(11) **EP 1 853 889 B1**
(45) Veröffentlichungstag und Bekanntmachung des Hinweises auf die Patenterteilung: **05.05.2010**
(21) Anmeldenummer: 06707403.9
(22) Anmeldetag: 03.03.2006
(51) Int. Cl.: G01L 1/14, G01L 1/24

(54) **KRAFTMESSZELLE**
LOAD CELL
CELLULE DE MESURE DE FORCE

(30) Priorität: 03.03.2005 DE 102005010982
(43) Veröffentlichungstag der Anmeldung: 14.11.2007
(73) Patentinhaber: BAG Bizerba Automotive GmbH, 72336 Balingen (DE)
(72) Erfinder: WEHINGER, Rolf-Dieter, 72336 Balingen (DE); METZGER, Frank, 72461 Albstadt (CH); BALTINGER, Jörg, 72336 Balingen (DE); PLOCHER, Thomas, 72172 Sulz (DE)
(74) Vertreter: Hoeger, Stellrecht & Partner Patentanwälte
(86) Internationale Anmeldenummer: PCT/EP2006/001972
(87) Internationale Veröffentlichungsnummer: WO 2006/092325

(56) Entgegenhaltungen:
- EP-A- 0 199 067
- DE-A1- 19 918 200

## Beschreibung

Die Erfindung betrifft eine Kraftmesszelle mit einem Kraftaufnehmer zur Aufnahme von zu bestimmenden Zug- und Druckkräften, wobei der Kraftaufnehmer ein biegeelastisches Element und ein auf das biegeelastische Element arbeitendes Krafteinleitungsteil aufweist, mit einer Sensoranordnung zur Erfassung einer Verformung des biegeelastischen Elements und deren Umwandlung in ein elektrisches Wägesignal und mit einem den Kraftaufnehmer und die Sensoranordnung aufnehmenden Gehäuse mit einem biegesteifen Wandteils, an welchem das biegeelastische Element des Kraftaufnehmers gehalten ist.

Eine Kraftmesszelle, bei der das biegeelastische Elemente als Membran ausgebildet ist, ist z.B. aus der DE 36 27 127 A1 bekannt. Diese Kraftmesszelle ist in der Form einer Kraftmessdose ausgebildet, bei der ein biegesteifes Trägerelement die Membran elastisch verformbar hält, wobei die Verformung der Membran z.B. mittels einer Sensoranordnung, die einen Hallgenerator beinhaltet, erfasst wird.

Aus der DE 41 32 108 A1 ist ebenfalls eine Kraftmesszelle der eingangs beschriebenen Art bekannt, bei der ebenfalls eine Membran das biegeelastische Element bildet. Als Sensoranordnung wird eine kapazitive Sensoranordnung verwendet.

Den vorgenannten Kraftmesszellen ist gemeinsam, dass sie in rauer Umgebung nur mit geringem Nutzen eingesetzt werden können.

Eine Verbesserung bringt hier die Kraftmesszelle gemäß DE 103 25 390 A1, die zum einen robust ist und zum anderen auch in beengten Verhältnissen eingebaut werden kann.

Nachteilig bei dieser Lösung ist die relativ aufwändige Konstruktion insbesondere für die Montage des biegeelastischen Elements (auch hier als Membran ausgebildet) sowie die Justierung der Elemente der Sensoranordnung zueinander.

Die DE 199 18 200 A1 offenbart eine Lastmesseinrichtung zum Messen von als Last sich äußernden Kräften zwischen einem Primärteil und einem Sekundärteil. Das Primärteil und das Sekundärteil sind relativ zu einander verschiebbar. Es ist ein Messwertgeber vorgesehen, mit einem festen Messwertgeberteil, welches mit dem Primärteil verbunden ist, und mit einem Messschaft, welcher mit dem Sekundärteil verbunden ist.

Aufgabe der vorliegenden Erfindung ist es, eine Kraftmesszelle der eingangs beschriebenen Art vorzuschlagen, welche wirtschaftlicher hergestellt und insbesondere auch einfacher bei der Justierung der Sensoranordnung gehandhabt werden kann.

Diese Aufgabe wird erfindungsgemäß bei der Kraftmesszelle der eingangs beschriebenen Art dadurch gelöst, dass die Sensoranordnung auf einem separaten Träger angeordnet ist, welcher an dem biegesteifen Wandteil und/oder einem biegesteifen Bodenteilbereich des Gehäuses gehalten ist.

Bevorzugt wird der Träger, auf dem die Sensoranordnung angeordnet ist unmittelbar an dem biegesteifen Wandteil und/oder einem biegesteifen Bodenteilbereich des Gehäuses gehalten.

Besonders bevorzugt ist es, den Träger ausschließlich am biegesteifen Wandteil des Gehäuses zu halten und abzustützen, d.h. Gehäuseteile, die nicht Teil des biegesteifen Wandteils des Gehäuses bilden, halten einen Abstand zu dem Träger ein, sodass selbst bei maximal zulässigen Zug- und Druckkräften, bei denen eine gewisse Verformung dieser anderen Gehäuseteile erfolgen kann, diese keinen Einfluss auf den Träger und dessen Geometrie nehmen und damit die Sensoranordnung auf dem separaten Träger nicht beeinflussen kann. Damit wird eine maximale Sicherheit vor Fehlmessungen auch bei der Einwirkung von hohen Zug- und Druckkräften insbesondere auch bei der Einwirkung von Kräften senkrecht zur Messrichtung der Messzelle erzielt.

Sensoranordnungen für die erfindungsgemäße Kraftmesszelle umfassen ein Geberelement und ein hiervon getrenntes Sensorelement, wobei ein erstes dieser beiden Elemente an dem Träger ortsfest und das zweite dieser Elemente bezüglich dem ersten Element ortsveränderlich an dem Träger gehalten wird.

Dabei wird das zweite Element vorzugsweise an einem Federteil des Trägers gehalten, wobei das Federteil zum einen einstückig mit dem Träger ausgebildet werden kann oder aber als separates Teil gefertigt und auf dem Träger fixiert, beispielsweise verschweißt, werden kann. Damit ist die Möglichkeit geschaffen, das für die Genauigkeit der Kraftmesszelle wichtige Ausrichten von Geber- und Sensorelement in einem vorgeschalteten und separaten Prozess vorzunehmen, was wesentlich einfacher ist, als dies erst beim Zusammenbau der Kraftmesszelle zu bewerkstelligen. Darüber hinaus können Geber- und Sensorelement zur Erzielung maximaler Signale zueinander angeordnet werden, auch wenn die dabei einzuhaltenden Abstände gegebenenfalls gering sein sollten. Auch in diesem Fall ist ein hohes Maß an gleich bleibender Produktqualität einfach zu gewährleisten.

Bevorzugt wird das zweite Element im unbelasteten Zustand des Kraftaufnehmers in einem Neutralpunkt des biegeelastischen Elements angeordnet sein, sodass zum einen eine maximale Empfindlichkeit der Sensoranordnung bzw. der Kraftmesszelle selbst erzielbar ist, und zum anderen eine Unempfindlichkeit der Messung von bei der Messung eventuell auftretenden Querkräften resultiert.

Bevorzugte Sensoranordnungen arbeiten nach dem Prinzip der berührungsfreien Wegmessung, sodass Geber- und Sensorelement zwei körperlich voneinander völlig separate Teile darstellen, die verlustfrei relativ zueinander bewegbar sind.

Eine besonders geeignete Sensoranordnung, die nach dem Prinzip der berührungsfreien Wegmessung arbeitet, ist eine Hall-Sensoranordnung mit einem Magneten als Geberelement und einem Hall-Sensor als Sensorelement.

Ebenfalls eine bevorzugte Sensoranordnung, die nach dem Prinzip der berührungsfreien Wegmessung funktioniert, ist eine optische Sensoranordnung mit einer Lichtquelle als Geberelement und einem Photoelement als Sensorelement.

Für die Anordnung von Geber- und Sensorelement der Sensoranordnung an dem separaten Träger bieten sich selbstverständlich mehrere Alternativen an, wobei allerdings bevorzugt ist, eines oder beide dieser Elemente an dem Träger mechanisch zu halten.

Das bedeutet, dass das jeweilige Element in einem Teil des Trägers, beispielsweise im Klemmsitz, angeordnet ist, oder in eine Endposition eingerückt und diese dann mechanisch gesichert wird. Gegenüber einer Klebeverbindung hat die mechanische Halterung der Sensor- und Geberelemente am separaten Träger den Vorteil, dass hier keine Alterungsprozesse zu befürchten sind, die zu einer Veränderung der Position von Geber- und Sensorelement gegeneinander führen könnten.

Insbesondere für den Anwendungsfall der vorliegenden Kraftmesszelle in Automobilen, insbesondere zur Bestimmung von auf Automobilsitzen ausgeübte Kräfte bei Belastung durch eine Person, ist dies von Bedeutung, da diese Kraftmesszellen unter Umständen viele Jahre in dem Kraftfahrzeug verbleiben und sicher funktionieren müssen, um verlässliche Daten für die Steuerung der Auslösung des Airbags zu generieren.

Besonders bevorzugt ist das biegeelastische Element als eine biegeelastische Membran auszubilden, welche an dem biegesteifen Wandteil des Gehäuses mit ihrem Wandbereich gehalten ist. Für die Herstellung der biegeelastischen Membran eignen sich insbesondere metallische Materialien.

Die biegeelastische Membran kann streifenförmig oder polygonal ausgebildet sein, oder aber auch kreisrund, was bevorzugt wird, insbesondere im Hinblick auf die dann erzielbare höhere Unempfindlichkeit gegen Kippmomente, die bei der Krafteinleitung, sei es Zug- oder Druckkräfte, bei der Kraftmesszelle auftreten können.

Bevorzugte biegeelastische Membranen weisen eine mittige Ausnehmung, beispielsweise in Form einer Durchgangsöffnung auf, wobei die Membranen mit kreisrunder Form dann als Ringscheibe ausgebildet sind.

Diese Ausführungsform der biegeelastischen Membran hat mehrere Vorteile, die sich im Folgenden im Einzelnen noch erschließen werden.

Das Krafteinleitungsteil und das biegeelastische Element werden vorzugsweise einstückig miteinander ausgebildet, oder aber zunächst als zwei separate Teile hergestellt, und dann miteinander fest verbunden. Dies kann z.B. durch Verschweißen oder andere stoffschlüssige Verbindung geschehen.

Das Krafteinleitungsteil wird bei einer bevorzugten Ausführungsform koaxial in einer Durchgangsöffnung des Gehäuses verschieblich angeordnet. Insbesondere ragt bei dieser Ausführungsform mit Vorteilen für die Gesamtkonstruktion das Krafteinleitungsteil partiell durch die Durchgangsöffnung des Gehäuses heraus, sodass es unmittelbar zur Krafteinleitung von außen verfügbar ist.

Im Hinblick auf die Einfachheit der Justierung der Kraftmesszelle nach dem Zusammenbau wird das Krafteinleitungsteil bei einer bevorzugten Ausführungsform ein auf das biegeelastische Element arbeitendes Fußteil und ein gegenüber dem Fußteil verstellbares Kontaktelement aufweisen, welches in mechanischem Kontakt zu einer ortsveränderlich am Träger gehaltenen Komponente der Sensoranordnung angeordnet ist.

Hierbei empfiehlt sich wieder die Verwendung einer biegeelastischen Membran als biegeelastisches Element mit einer mittigen Ausnehmung, insbesondere einer Durchgangsöffnung, wobei dann das Kontaktelement des Krafteinleitungsteils mittig zur Ausnehmung der biegeelastischen Membran angeordnet sein kann und einen Kontakt mit der ortsveränderlichen am Träger gehaltenen Komponente der Sensoranordnung, insbesondere in der Ebene des biegeelastischen Membran herstellen kann.

Das gegenüber dem Fußteil des Krafteinleitungsteils verstellbare Kontaktelement erlaubt auch im zusammengebauten Zustand der Kraftmesszelle noch eine Justierung des Nullpunkts der Kraftmesszelle vorzunehmen, sodass im Rahmen des Zusammenbaus der Kraftmesszelle geringere Ansprüche an die Präzision der Anordnung der einzelnen Bauteile der Kraftmesszelle möglich sind, ohne Qualitätseinbußen der fertigen Kraftmesszelle im Gegenzug tolerieren zu müssen.

Bevorzugt wird das Fußteil des Krafteinleitungsteils größere Abmessungen aufweisen als die Durchgangsöffnung des Gehäuses.

Dies vermeidet, dass bei zu großen Zugkräften eine Überlastung des elastischen Elements auftritt, dass sich dann das Fußteil des Krafteinleitungsteils an dem Gehäuse abstützen kann.

Vorzugsweise wird wie bereits oben erwähnt ein Bereich des Krafteinleitungsteils durch die Durchgangsöffnung aus dem Gehäuse herausragen, sodass dort unmittelbar die Kraft eingeleitet werden kann.

Der mechanische Kontakt des Kontaktelements des Krafteinleitungsteils mit der ortsveränderlichen gehaltenen Komponente der Sensoranordnung sollte bevorzugt im Wesentlichen ein punktförmiger Kontakt sein.

Besonders bevorzugt ist in diesem Zusammenhang, wenn das Kontaktelement eine verrundete Spitze aufweist, über welche der mechanische Kontakt mit der ortsveränderlich gehaltenen Komponente der Sensoranordnung hergestellt wird. Dadurch wird vermieden, dass bei Querkomponenten, die bei Krafteinwirkung auf das Krafteinleitungsteil wirken können, diese Querkomponenten zu einer Signalverfälschung führen, da die verrundete Spitze in ihrer Vertikalposition gegenüber der Membran und damit die ortsveränderliche Komponente der Sensoranordnung innerhalb der Kraftmesszelle im Wesentlichen unverändert bleibt.

Um dies weiterhin zu unterstützen wird vorzugsweise vorgesehen, dass die verrundete Spitze des Kontaktelements des Krafteinleitungsteils einen gleitenden mechanischen Kontakt mit der ortsveränderlich gehaltenen Komponente der Sensoranordnung aufweist.

Bei einer weiteren bevorzugten Ausführungsform der erfindungsgemäßen Kraftmesszelle wird die Kraftmesszelle Anschlagmittel umfassen, die die Bewegung des Krafteinleitungsteils bei Krafteinwirkung begrenzen.

Bevorzugt werden solche Anschlagmittel so ausgebildet, dass sie sowohl bei der Einwirkung von Zug- als auch bei Druckkräften die Bewegung des Krafteinleitungsteils begrenzen.

Bei einer weiteren bevorzugten Ausführungsform werden die Anschlagmittel ein erstes Element umfassen, welches sich auf der Außenseite des Gehäuses abstützt. Dadurch werden Druckkräfte, die auf die Kraftmesszelle wirken in ihrer Wirkung auf das biegeelastische Element auf den zulässigen Kraftbereich begrenzt.

Bevorzugt wird das erste Element der Anschlagmittel auf seiner der Außenseite des Gehäuses zugewandten Seite eine Aufnahme für ein Elastomerelement aufweisen. Das Elastomerelement kann zweierlei Funktionen erfüllen, zum einen die nachgiebige Lagerung des ersten Elements der Anschlagmittel auf der Außenseite des Gehäuses und zum anderen eine Abdichtfunktion, insbesondere dann, wenn sich das Elastomerelement ringsum die Durchgangsöffnung des Gehäuses erstreckt.

Bevorzugt weisen die Anschlagmittel ein zweites Element auf, welches sich an der Innenseite des Gehäuses abstützt. Beispielsweise eignet sich hierbei das im vorhergehenden als Fußteil des Krafteinleitungsteils beschrieben wurde, welches eine radial größere Abmessung aufweist, als die Durchgangsöffnung des Gehäuses, durch welche sich das Krafteinleitungsteil hindurch erstreckt. Im Hinblick auf die beabsichtigte Anwendung der Kraftmesszelle im Kraftfahrzeug wird bei einer bevorzugten Ausführungsform das Gehäuse den Kraftaufnehmer und die Sensoranordnung mit dem separaten Träger im Wesentlichen allseitig umschließen.

Das Gehäuse der Kraftmesszelle kann je nach Anwendungszweck und Einsatzgebiet unterschiedlich ausgebildet sein. Für die insbesondere im Interesse stehenden Anwendungsfälle im Kfz-Bereich ist vorgesehen, dass das Gehäuse ein Deckelelement, ein Bodenelement und eine das Deckel- mit dem Bodenelement verbindende biegesteife Seitenwand umfasst. Für die im vorhergehenden als bevorzugt beschriebene kreisrunde Membran wird das Gehäuse selbstverständlich bevorzugt eine Scheibenform oder Hohlzylinderform aufweisen.

Bevorzugt wird das Gehäuse mehrteilig ausgeführt, insbesondere zweiteilig, wobei dann das Gehäuse aus einem Deckelteil und einem Bodenteil gebildet wird. Die Seitenwand kann dann Bestandteil des Deckel- und/oder Bodenteils sein.

Am einfachsten ist es, das Gehäuse der Kraftmesszelle dadurch zu bilden, dass Deckelteil und Bodenteil miteinander verschweißt werden. Hierbei reicht es aus, wenn Deckelteil und Bodenteil aufeinander angeordnet und so miteinander fixiert werden und dann die Schweißnaht gebildet werden kann. Auch wenn diese Art des Zusammenbaus des Gehäuses gewisse Toleranzen mit sich bringen kann, ist durch die im vorhergehenden beschriebenen Möglichkeiten der Justierung der Sensoranordnung innerhalb des bereits fertig gestellten Gehäuses der Kraftmesszelle ausreichend Möglichkeit gegeben, die Qualitätsanforderungen der Kraftmesszelle ungeschmälert, auch bei dieser einfachen Art des Zusammenbaus der Kraftmesszelle, zu realisieren.

Bei den Gehäuseteilen wird vorzugsweise das Deckelelement die Durchgangsöffnung des Gehäuses umfassen, durch die hindurch das Krafteinleitungsteil auf das biegeelastische Element der Kraftmesszelle arbeitet.

Daneben kann das Gehäuse eine Durchgangsöffnung für elektrische Versorgungs- und/oder Signalleitungen umfassen, welche der Stromversorgung der Sensoranordnung bzw. der Sensoranordnung nachgeschalteten Auswerteelektronik, die gegebenenfalls ebenfalls in dem Kraftmesszellengehäuse untergebracht werden kann, dienen. Die Signalleitungen liefern die von der Sensoranordnung erzeugten Signale, die gegebenenfalls bereits von der Elektronik, die in der Kraftmesszelle untergebracht ist, aufgearbeitet werden zur Außenwelt und machen diese für Steuerungsfunktionen zugänglich.

Das Bodenelement des Gehäuses wird vorzugsweise ein oder mehrere Befestigungselemente aufweisen, mit denen dieses beispielsweise im Kraftfahrzeug verankert werden kann. Beispielsweise können an dem Bodenelement Laschen vorhanden sein, die sich mit anderen Teilen des Kraftfahrzeuges verschrauben lassen.

Alternativ oder ergänzend kann an dem Bodenelement ein Gewindeteil ausgebildet sein, mit dem eine Schraubverbindung mit externen Teilen herstellbar ist. Bevorzugt wird das Gewindeteil einstückig mit dem Bodenelement ausgebildet sein, was beim Zusammenbau der Kraftmesszelle Schritte spart und darüber hinaus der Genauigkeit der Anordnung des Gewindeteils gegenüber der Kraftmesszelle insgesamt förderlich ist.

Eine der Möglichkeiten, das biegeelastische Element an dem biegesteifen Wandteil des Gehäuses zu halten ist dieses zwischen zwei Gehäuseteilen im Klemmsitz zu halten.

Alternativ hierzu kann das biegeelastische Element mit dem Gehäuse mittels einer Schweißstelle verbunden sein, sodass das biegeelastische Element und das Gehäuseteil wieder als Einheit gehandhabt werden können. Insbesondere ist es möglich die Biegefestigkeit des Wandteils durch das Verschweißen erst zu erreichen oder aber zu verbessern. Damit lassen sich Gewichtseinsparungen beim Gehäuse realisieren.

Ähnliches gilt auch für den separaten Träger, der zwischen zwei Gehäuseteilen im Klemmsitz gehalten sein kann.

Gleichfalls ist es möglich, den Träger an einem Gehäuseteil stoffschlüssig, insbesondere mittels einer Klebe- oder Schweißverbindung zu verbinden.

Wiederum ermöglicht die vorliegende Erfindung auch hier eine einfache Fertigung ohne allzu hohe Anforderungen an geringe Toleranzen beim Zusammenbau von biegeelastischem Element und dem Gehäuse bzw. dem Träger und dem Gehäuse und auch der Anordnung zwischen Träger und biegeelastischem Element, da bevorzugt der mechanische Kontaktpunkt zwischen dem ortsveränderlichen Teil der Sensoranordnung und dem Krafteinleitungsteil justierbar gehalten werden kann.

Die Durchgangsöffnung des Gehäuses ist vorzugsweise als eine Art Führung für das Krafteinleitungsteil ausgebildet, wobei damit nicht gemeint ist, dass das Krafteinleitungsteil quasi mit Gleitreibung in der Durchgangsöffnung des Gehäuses geführt wird. Vielmehr wird bevorzugt zwischen dem Krafteinleitungsteil und der Durchgangsöffnung des Gehäuses ein Spalt vorhanden sein, der verhindert, dass Querkräfte eine zu starke Auslenkung des Krafteinleitungsteils aus der Normalen bezüglich des biegeelastischen Elementes bewirken.

Insbesondere ist die Durchgangsöffnung des Gehäuses so bemessen, dass sie das Krafteinleitungsteil gegen Kippmomente gesichert führt.

Der bevorzugt vorgesehene Spalt zwischen dem Krafteinleitungsteil und der Durchgangsöffnung weist eine Breite von insbesondere 0,1 mm bis ca. 0,5 mm auf.

Bei einer Ausführungsform ist es vorgesehen, dass das Geberelement und das Sensorelement außermittig am Träger angeordnet sind. Dadurch lässt sich ein flacher Aufbau des Trägers und damit der Kraftmesszelle realisieren, so dass sich diese mit geringer axialer Höhe ausbilden lässt.

Zur Erreichung eine geringen axialen Höhe ist es vorteilhaft, wenn das erste Element unterhalb des zweiten Elements angeordnet ist, wobei das zweite Element in einem Raum oberhalb des ersten Elements beweglich ist.

Es ist dann günstig, wenn der Träger eine Ausnehmung aufweist, die durchgehend oder nicht durchgehend als Aussparung ausgebildet sein kann, in welcher das zweite Element mindestens teilweise angeordnet ist. Dadurch lässt sich das zweite Element auf einfache Weise an dem Träger fixieren.

Günstig ist es, wenn die Ausnehmung an einem Federteil des Trägers gebildet ist. Dadurch lässt sich auf einfache Weise eine Ortsveränderlichkeit zwischen dem ersten Element und dem zweiten Element realisieren.

Der Träger mit der Sensoranordnung lässt sich mit geringer axialer Höhe ausbilden, wenn das Geberelement und das Sensorelement quer versetzt zu einer Achse eines Kontaktelements angeordnet sind.

Günstig ist es, wenn der Träger einen Kontaktbereich aufweist, welcher konkav ausgebildet ist. Dadurch lässt sich ein Punktkontakt zwischen einem Kontaktelement und dem Träger realisieren. Der Kontaktbereich ist dabei vorzugsweise an einem Federteil des Trägers gebildet. Der entsprechende Träger lässt sich auf einfache Weise beispielsweise einstückig als Spritzteil herstellen.

Günstig ist es, wenn der Kontaktbereich zwischen beabstandeten Federstegen angeordnet ist. Der Kontaktbereich lässt sich dadurch zentral anordnen, um eine einfache symmetrische Ausrichtung zu einem Kontaktelement zu erreichen. Er lässt sich dabei gleichzeitig an einem Federteil ausbilden, um bei Krafteinleitung eine Bewegung zwischen dem Federteil und einem ortsfesten Teil zu realisieren.

Besonders vorteilhaft ist es, wenn ein Federteil beabstandete Federstege aufweist, welche jeweils mit beabstandeten Schwächungszonen versehen sind. Dadurch lässt sich das Federteil bezüglich seiner Reaktion auf Kraftbeaufschlagung definiert ausbilden.

Insbesondere ist es günstig, wenn korrespondierende Schwächungszonen unterschiedlicher Federstege auf gleicher Höhe liegen. Dadurch lässt sich eine Parallelogrammstruktur realisieren, um eine optimierte Krafteinleitung zu erhalten.

Diese und weitere Vorteile der Erfindung werden im Folgenden anhand der Zeichnung noch näher erläutert.

Es zeigen:
- Figur 1: eine seitliche Schnittansicht eines Ausführungsbeispiels einer Kraftmesszelle mit einer ersten Ausführungsform eines separaten Trägers; und
- Figur 2: eine perspektivische Darstellung einer zweiten Ausführungsform eines separaten Trägers.

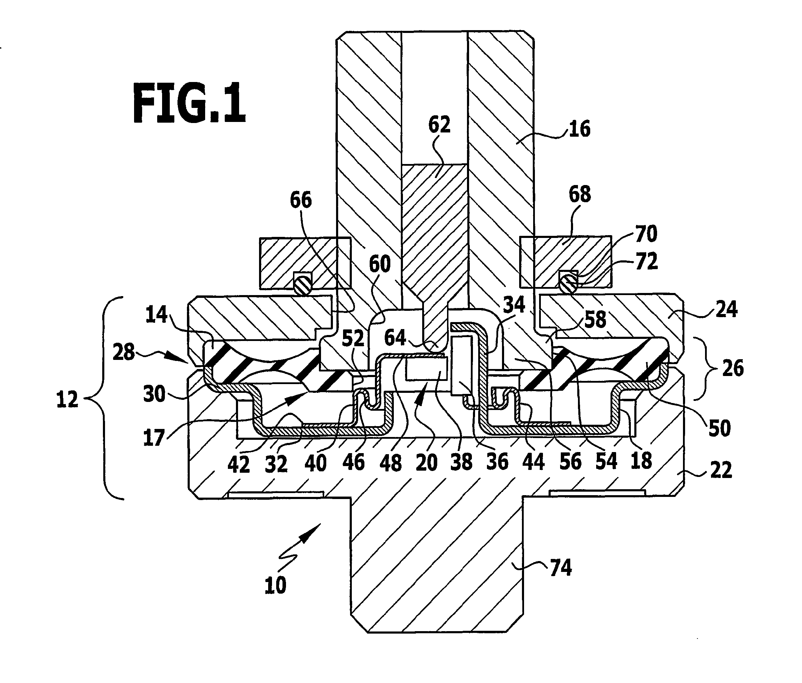

Figur 1 zeigt einen Querschnitt durch ein Ausführungsbeispiel einer erfindungsgemäßen Kraftmesszelle 10. Diese ist aufgebaut aus einem Gehäuse 12, einem in dem Gehäuse 12 angeordneten biegeelastischen Element 14, welches zusammen mit einem Krafteinleitungsteil 16 einen Kraftaufnehmer 17 der Kraftmesszelle 10 bildet, sowie einem separaten Träger 18, auf dem eine Sensoranordnung 20 der Kraftmesszelle 10 angeordnet ist.

Das Gehäuse 12 setzt sich aus einem Bodenteil 22 und einem Deckelteil 24 zusammen, welche gemeinsam eine Seitenwand 26 des Gehäuses 12 bilden, die das biegefeste Wandteil des Gehäuses 12 darstellt.

An den miteinander in Berührung kommenden Bereichen von Bodenteil 22 und Deckelteil 24 sind am Außenumfang angefaste Bereiche vorgesehen, die zusammen eine keilförmige Nut 28 bilden, die beim Verbinden von Bodenteil 22 und Deckelteil 24 mittels Schweißen die Schweißnaht aufnimmt.

Der Träger 18 ist in dem Innenraum des Gehäuses 12 so angeordnet, dass er lediglich mit dem biegefesten Teil des Gehäuses 12, nämlich der Seitenwand 26, in Kontakt steht, mit der es an einem Randbereich 30 vorzugsweise verklebt oder verschweißt ist. Von allen anderen Bereichen des Gehäuses 12 hält der separate Träger 18 einen ausreichenden Abstand, sodass bei eventuellem Verwinden des Gehäuses 12 kein mechanischer Kontakt zwischen dem separaten Träger 18 und dem Gehäuse 12 zustande kommt.

Der Träger 18 ist vorzugsweise aus einem Metallblech oder einem Kunststoffteil gebildet, welches durch einen Umformschritt bzw. im Spritzverfahren hergestellt, zum einen mit dem Randbereich 30 versehen wird und zum anderen mit dem nach unten rückspringenden Bereich 32, der in seiner Mitte aufgebrochen und aufgebogen ist, um die Halterung für eine Komponente der Sensoranordnung 20 zu bilden. Dieser Teil des separaten Trägers 18 umfasst eine senkrecht nach oben gebogene Lasche 34, an welcher, nur schematisch dargestellt, ein Hall-Sensorelement 36 der Sensoranordnung 20 mechanisch gehalten ist. Das dem Hall-Sensorelement 36 zugeordnete Geberelement, ein Magnet 38, ist gegenüber dem Hall-Sensorelement 36 an der Position mit maximaler Empfindlichkeit des Hall-Sensorelements 36 ausgerichtet.

Während das Hall-Sensorelement 36 durch die Lasche 34 ortsfest innerhalb des Gehäuses gehalten wird (bezogen auf die biegesteife Seitenwand 26), ist das Geberteil, d.h. der Magnet 38, ortsveränderlich angeordnet und zwar von einem Federteil 40 gehalten, welches sich an dem separatem Träger 18 im Bereich des Rücksprungs 32 abstützt. Das Federteil 40 ist vorzugsweise als ein ringförmiges Kunststoffteil oder Federblechteil geformt, und stützt sich mit einem Fußteil 42 auf dem Trägerteil 18 ringförmig ab. Sind Federteil 40 und Trägerteil 18 aus Kunststoff gefertigt worden, sind das Federteil 40 und das Trägerteil 18 vorzugsweise einstückig hergestellt. Zur Mitte hin ist das Federteil 40 zu einem Bund 44 nach oben gebogen und setzt sich in Richtung zur Mitte mit einer Art Faltenbalg 46 fort, an den sich dann wiederum eine parallel zur Membranhauptebene parallele Haltefläche 48 anschließt. Die Haltefläche 48 hält auf Ihrer Unterseite den Magnet 38, wobei dessen Position gegenüber dem ortsfest gehaltenen Hall-Sensor 36 je nach Belastung des Krafteinleitungsteils 16 variieren kann. Die Bewegung, die der Magnet 38 an dem Halteflächenteil 48 ausführt, ist durch das Faltenbalgelement 46 mechanisch von dem Rücksprung 32 des separaten Trägers entkoppelt, sodass sich eine Ortsveränderung des Magneten 38 nicht in einer Verformung des Trägers 18 fortsetzt.

Ein weiterer Teil des Federelements 40 kann so geformt werden, dass es den Hall-Sensor 36 in seiner Position an der Lasche 34 mechanisch sichert.

Die mechanische Entkopplung der Ortsveränderung des Magnetes 38 bei Belastung der Kraftmesszelle 10 gegenüber dem Träger 18, insbesondere der Position des Hall-Sensors 36 an der Lasche 34, kommt auch dadurch zustande, dass die Materialstärke und die Festigkeit des Trägers 18 entsprechend größer gewählt ist.

In der Ausgestaltung des Trägers 18 und der daran angeordneten Sensoranordnung 20 ist ein wesentlicher Aspekt der vorliegenden Erfindung verwirklicht. Hier kann nämlich bereits vor dem Zusammenbau der Kraftmesszelle in einem separat durchzuführenden Montagevorgang der Träger 18 vorbereitet und die Sensor-Anordnung 20 an ihm vormoniert werden, sodass der Träger 18 zusammen mit der Sensoranordnung 20 bereits eine definierte Zuordnung von Sensorelement und Geberelement aufweist, bevor der Träger 18 zusammen mit der Sensoranordnung 20 in das Gehäuse 12 der Kraftmesszelle 10 eingebaut wird. Von Bedeutung ist auch das Federelement 40 des Trägers 18 für die ortsveränderliche Halterung einer der Komponenten der Sensoranordnung 20.

Dieser Vorteil ergibt sich nicht nur bei der Verwendung einer Hall-Sensoranordnung, sondern genauso bei anderen berührungsfreien Wegmesssystemen, beispielsweise einer optischen Sensoranordnung. Auch hier kann eine optimale Justierung von Geberelement und Sensorelement jeweils separat und unabhängig von den Zusammenbauschritten der Kraftmesszelle erfolgen, was zum einen eine bessere Kontrolle bei der Montage der Einzelteile erlaubt, und zum anderen auch eine bessere Justierung falls erforderlich.

Die Membran 14 ist im vorliegenden Ausführungsbeispiel als kreisrunde Membran ausgebildet, kann aber auch streifenförmig oder polygonal ausgebildet sein, wenn sichergestellt ist, dass die Streifen- oder Polygonalform für die einwirkenden Kräfte ausreichend stabil ist und insbesondere wenn keine quer zur Hauptrichtung der zu messenden Kräfte wirkende Kippmomente bei der Krafteinleitung zu erwarten sind.

Die Membran 14 ist im vorliegenden Ausführungsbeispiel ringförmig ausgebildet mit einem verdickten Rand 50, mit dem die Membran 14 an der biegefesten Seitenwand 26 gehalten ist. Der Rand 50 der Membran 14 lässt sich zusammen mit dem Träger 18, beispielsweise mit dem Bodenteil 22, verschweißen oder verkleben, bevor das Deckelteil 24 aufgesetzt und das Gehäuse 12 insgesamt im Bereich der Nut 28 verschweißt wird. Durch das Verschweißen des Randteils 50 mit der Seitenwand 26 wird eine Erhöhung der Biegesteifigkeit erreicht.

Der Rand 50 der Membran 14 trägt hier der gemeinsamen Montage von Träger 18 und Membran 14 Rechnung, indem dort ein rückspringender Randbereich vorgesehen ist, in den das Randteil 30 des Trägers 18 einrückt, sodass dieses in seiner Lage zusätzlich radial gehalten und gewissermaßen verspannt wird. Dadurch erhält der Träger 18 eine definierte Form und durch die Vorspannung, die dem Träger 18 durch das Einrücken des Randbereichs 30 in den korrespondieren Rücksprung seitens des Randes 50 der Membran 14 ermöglicht wird, wird die Position insbesondere des Rücksprungs 32 des Trägers 18 weiter verbessert. Bei der Montage kann vorgesehen sein, dass zunächst die Membran 14 mit dem bereits fertig montierten Träger 18 mit der Sensoranordnung 20 miteinander verbunden, insbesondere auch bereits miteinander verschweißt werden, bevor dann diese Einheit aus Membran 14, Träger 18 und Sensoranordnung 20 in das Bodenteil 22 des Gehäuses 12 eingesetzt und dann mit diesem verschweißt wird.

Alternativ kann bei der Montage zunächst der bereits fertig montierte Träger 18 mit der Sensoranordnung 20 mit dem Bodenteil 22 des Gehäuses 12 am Randteil 30 verklebt werden. Danach wird die Membran 14 auf das montierte Trägerteil 18 aufgelegt und zwischen den beiden Gehäuseteilen Bodenteil 22 und Deckelteil 24 im Klemmsitz gehalten.

Im mittigen Teil der Membran 14 ist eine Durchgangsöffnung 52 vorgesehen, in die hinein die Sensoranordnung beim Zusammenbau hineinragt, sodass die empfindlichste Stelle des Hall-Sensors 36 und dem darauf gerichteten Magneten 38 sich im Wesentlichen in der Mittelebene der Membran 14 befindet.

Auch der Bereich rund um die Durchgangsöffnung 52 der Membran 14 ist verstärkt ausgebildet und weist einen ringförmigen Rücksprung 54 auf, welcher ein Fußteil 56 des Krafteinleitungsteils 16 aufnimmt. Die Membran 14 und das Krafteinleitungsteil 16 können einstückig gefertigt werden oder im Bereich des Rücksprungs 54 miteinander verschweißt werden.

Dieses Fußteil 56 des Kraftaufnehmers 17 ist mit einem nach radial außen abstehenden Randbereich 58 versehen, auf den später im Zusammenhang mit der Beschreibung der bei der Kraftmesszelle 10 vorhandenen Überlastsicherung noch weiter eingegangen werden soll.

Das Fußteil 56 des Krafteinleitungsteils 16 weist darüber hinaus zentral eine Ausnehmung 60 auf, welche Raum schafft für eine innerhalb der Durchgangsöffnung 52 der Membran 14 positionierte Sensoranordnung 20.

Das Krafteinleitungsteil 16 ist im Wesentlichen hohlzylindrisch ausgebildet und hält im Inneren ein sich in die Ausnehmung 60 hinein erstreckendes Kontaktelement 62, welches in seiner Relativposition zur Ausnehmung 60 und damit in Richtung zur Mittelebene der Membran 14 hin relativverschieblich und justierbar ist. Nach der Justierung wird das Kontaktelement 62 in seiner Stellung gegenüber dem Krafteinleitungsteil 16 fixiert. Das Kontaktelement 62 kann als Gewindestift ausgeführt sein.

Das Kontaktelement 62 trägt an seinem freien, in die Ausnehmung 60 hineinragenden Ende eine Kontaktspitze 64, die in mechanischem Kontakt mit der Haltefläche 48 des Federteils 40 steht und so die relative Position des Geberelements in Form des Magneten 38 der Sensoranordnung 20 gegenüber dem Sensorelement in Form des Hall-Sensorelements 36 bestimmt.

Die Kontaktspitze 64 besitzt eine Rundung, welche bei einer Kippbewegung des Krafteinleitungsteils 16 über die Haltefläche 48 gleitet und damit keine Veränderung der relativen Position des Magneten 38 gegenüber dem Hall-Sensorelement bewirkt. Damit ist die Kraftmesszelle und damit das Maßsignal unempfindlich gegen Querkräfte und damit verbundene Kippbewegungen.

Nach einer vollständigen Montage der Kraftmesszelle, d.h. nach dem Einsetzen des Trägerelements 18 mit der Sensoranordnung 20 sowie der Membran 14 und dem darauf folgenden Verschließen mittels Verschweißen der beiden Gehäuseteile 22 und 24 kann dann über die Position des Kontaktelements 62 bzw. seiner Kontaktspitze 64 bezüglich der Mittelebene der Membran 14 eine Justierung noch vorgenommen werden, sodass die Gesamtheit des Kraftaufnehmers (Krafteinleitungsteil 16 und Membran 14) sowie das zugehörige Ensemble der Sensoranordnung 20 eine optimale Konfiguration aufweisen. Danach wird das Kontaktelement 62 in seiner Stellung innerhalb des Krafteinleitungsteils 16 festgelegt.

Das Krafteinleitungsteil 16 steht mit seinem dem Fußteil 42 entgegengesetzten Ende durch eine Durchgangsöffnung 66 im Deckelteil 24 des Gehäuses 12 aus dem Inneren der Kraftmesszelle 10 heraus und steht damit zur Krafteinleitung unmittelbar zur Verfügung.

An seiner Außenfläche weist das Krafteinleitungstell 16 bevorzugt einen Gewindeabschnitt auf, der in der schematischen Zeichnung der hier vorliegenden Figur nicht näher gezeigt ist.

Auf diesen Außengewindeabschnitt des Krafteinleitungsteils 16 lässt sich eine Mutter 68 aufschrauben, die an ihrer zur Gehäuseoberfläche gewandten Seite eine Ringnut 70 aufweist, in der ein Elastomerring 72 aufgenommen ist. Die Nut 70 und der Elastomerring 72 sind so dimensioniert, dass der Elastomerring 72 etwas über die Oberfläche der Mutter 68 hinaus steht, sodass diese nicht direkt, sondern über den Elastomerring 72 auf der Gehäuseoberfläche des Deckelteils 24 zum Anliegen kommt.

Die Mutter 68 wird soweit auf den Außengewindeabschnitt des Krafteinleitungsteils 16 aufgeschraubt, bis diese noch einen Abstand zu der Oberfläche des Gehäuseteils 24 hält, die der maximalen zulässigen Bewegung des Krafteinleitungsteils 16 ins Innere des Gehäuses 12 hinein entspricht. Damit ist für die Krafteinleitung durch das Krafteinleitungsteil 16 bei Druckkräften eine maximale Begrenzung vorgegeben und der so gebildete Anschlag durch die Mutter 68 schützt die Membran 14 vor einer übermäßigen Belastung.

Bei der Einwirkung von Zugkräften wirkt sich der radial abstehende Rand 58 des Fußteils 56 ebenfalls als Anschlag, da dieser nur maximal soweit nach außen bewegbar ist, bis der radial abstehende Rand 58 an dem Deckelteil 24 und der hier speziell ausgebildeten Rücksprungfläche zur Anlage kommt.

Dadurch ist die Kraftmesszelle 10 sowohl bei der Einwirkung von Zug- als auch bei Druckkräften vor Überlastung geschützt.

Ferner wird die Kraftmesszelle 10 gegen übermäßige Kippbewegungen, d.h. Kraftkomponenten, die senkrecht zur Mittelachse des Krafteinfeitungsteils 16 einwirken, geschützt, dadurch dass das radial abstehende Fußteil in einen entsprechenden ringförmigen Rücksprung des Deckeloberteils 24 eingreift und dort gehalten wird, andererseits durch die auf der Gehäuseoberfläche angeordnete Mutter 68, die sich ebenfalls ab einer bestimmten Kippbewegung des Krafteinleitungsteils 16 am Gehäuse außen abstützt und einer weiteren Verkippung des Krafteinleitungsteils 16 entgegenwirkt.

Aufgrund dieser Maßnahmen ist die erfindungsgemäße Kraftmesszelle nicht nur einfach zu fertigen sondern hält auch übermäßigen Belastungen in rauer Umgebung ausgezeichnet stand. Aufgrund der Kapselung des Kraftaufnehmers, der aus Membran 14 und dem Fußteil des Krafteinleitungsteils 16 besteht, innerhalb des Gehäuses 12, das lediglich eine Durchgangsöffnung 66 für das Krafteinleitungsteil 16 aufweist sowie eine (hier nicht gezeigte) Durchgangsöffnung, um eine elektrische Verbindung zu dem Hall-Sensor 36 im Inneren des Gehäuses 12 herzustellen, findet eine im Wesentlichen dichte Kapselung statt, die die Kraftmesszelle für viele Jahre zuverlässig einsetzbar macht. Aufgrund des Elastomerrings 72, der sich zum einen gegen die Mutter 68, zum anderen gegen die Außenoberfläche des Deckelteils 24 abstützt, findet auch im Bereich des Durchbruchs 66, in dem das Krafteinleitungsteil 16 verschieblich gehalten ist, eine Abdichtung des Inneren der Kraftmesszelle 10 bzw. von dessen Gehäuse 12 statt. So kann ein Spalt zwischen der Durchgangsöffnung 66 und dem Krafteinleitungsteil 16 zugelassen werden, in der Gestalt, dass bei Belastungen, seien es Zug- oder Druckbelastungen, und auch bei nicht übergroßen Kippmomenten, eine berührungsfreie Bewegung des Krafteinleitungsteils 16 innerhalb der Durchgangsöffnung 66 ermöglicht ist. Trotzdem ist die so gestaltete Kraftmesszelle 10 in rauer, d.h. auch klimatisch rauer Umgebung wie sie das Automobil darstellt, zuverlässig zu betreiben.

Die nicht dargestellte Durchgangsöffnung zur Durchleitung von elektrischen Versorgungs- und Signalleitungen zu dem Hall-Sensor 36 können wie üblich mit Dichtungsmaterialien verschlossen werden, da hier keine Relativbewegung der Leitungen gegenüber der Gehäuse bzw. der Gehäusewand zugelassen werden muss.

Die Montage der Kraftmesszelle an ihrem Einsatzort erleichtert zum einen das aus dem Gehäuse 12 herausragende mit einem Außengewindeabschnitt versehenen Krafteinleitungsteil 16. Am Bodenteil 22 ist mittig ein Schraubbolzen 74 vorgesehen, der auch durch andere Befestigungselemente, wie z.B. radial abstehende Laschen, ersetzt oder ergänzt werden kann.

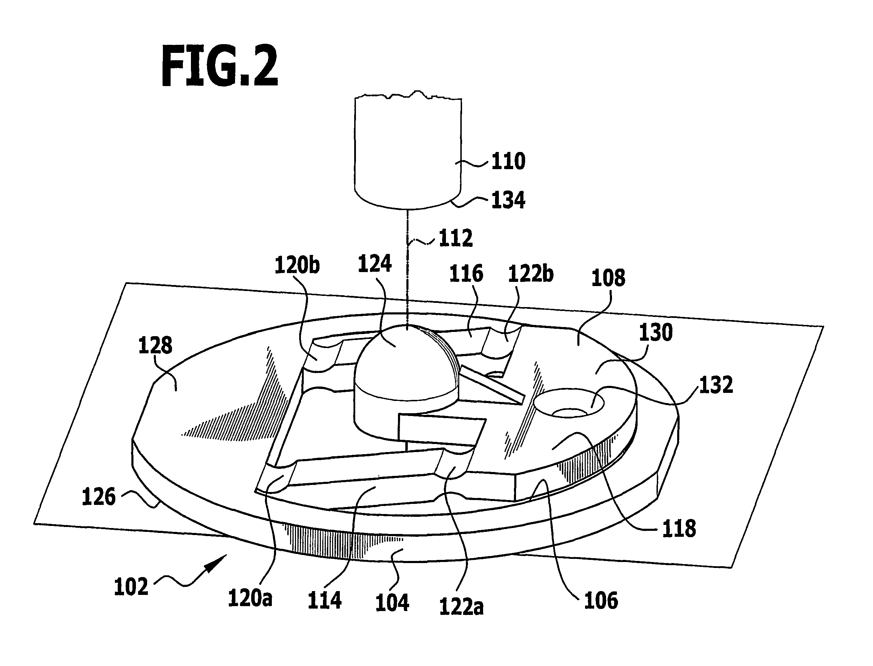

Bei einem weiteren Ausführungsbeispiel ist ein separater Träger 102 (Figur 2) einstückig ausgebildet und insbesondere aus einem Kunststoffmaterial hergestellt. An dem Träger 102 ist die Sensoranordnung 20 der entsprechenden Kraftmesszelle angeordnet. Die Anordnung ist insbesondere so wie oben beschrieben, das heisst der Träger 102 ist in dem Innenraum eines Gehäuses so angeordnet, dass er lediglich mit einem biegefesten Teil des Gehäuses, nämlich einer Seitenwand 26 und/oder einem entsprechenden Bereich (insbesondere äußeren Randbereich) des Bodenteils 22 , in Kontakt steht.

Der Träger 102 umfasst einen ortsfesten Teil 104, welcher näherungsweise ringförmig ausgebildet ist mit einer inneren Durchgangsöffnung 106. An dem ortsfesten Teil 104 ist ein Federteil 108 angeordnet, welches bei Krafteinleitung über ein Kontaktelement 110 in einer Richtung beweglich ist, welche parallel oder näherungsweise parallel zu einer Achse 112 des Kontaktelements 110 ist. In Figur 2 ist aus darstellerischen Gründen das Kontaktelement 110 beabstandet zu dem Träger 102 gezeigt.

Das ortsfeste Teil 104 liegt am Gehäuse 12 an; das Federteil 108 ist unbeeinflusst vom Gehäuse.

Das Federteil 108 umfasst einen ersten Federsteg 114 und einen zweiten Federsteg 116. Diese beiden Federstege 114 und 116 sind durch einen Verbindungsbereich 118 verbunden. Sowohl der erste Federsteg 114 als auch der zweite Federsteg 118 weisen an ihrer Verbindung zu dem ortsfesten Teil 104 Schwächungszonen 120a, 120b beispielsweise in der Form von Einschnürungen auf. Ferner weisen sie Schwächungszonen 122a, 122b an ihrer Verbindung zum Verbindungsbereich 118 auf. Die Schwächungszonen 120a und 120b liegen auf der gleichen Höhe relativ zum ortsfesten Teil 104. Ferner liegen die Schwächungszonen 122a und 122b auf der gleichen Höhe relativ zum ortsfesten Teil 104. Die Verbindungslinie zwischen den Schwächungszonen 122a und 122b ist parallel zur Verbindungslinie zwischen den Schwächungszonen 120a und 120b. Dadurch ist eine Parallelogrammstruktur für das Federteil 108 bereitgestellt.

Zwischen dem ersten Federsteg 114 und dem zweiten Federsteg 116 ist mittig ein Kontaktbereich 124 gebildet, auf welchen das Kontaktelement 110 wirkt. Der Kontaktbereich 124 ist konkav ausgebildet; beispielsweise ist er halbkugelförmig ausgebildet. Der Kontaktbereich 124 taucht durch die Durchgangsöffnung 52 des biegeelastischen Elements 14 hindurch. Die anderen Bereiche des Trägers 102 (einschließlich der Federstege 114, 116) liegen unterhalb des biegeelastischen Elements 14.

Der Kontaktbereich 124 ist auf die Achse 112 des Kontaktelements 110 ausgerichtet. Insbesondere sind eine Kugelachse des Kontaktbereichs 124 und die Achse 112 mindestens näherungsweise koaxial zueinander.

Der Kontaktbereich 124 ist ebenfalls mit dem Verbindungsbereich 118 verbunden.

Bei dem gezeigten Ausführungsbeispiel ist der ortsfeste Teil 104 flach ausgebildet mit einer ersten Fläche 126 und einer zweiten Fläche 128, zwischen welchen sich der ortsfeste Teil 104 erstreckt. Insbesondere sind die erste Fläche 126 und die zweite Fläche 128 parallel zueinander.

Im nicht kraftbeaufschlagten Zustand des Kontaktbereichs 124 steht das Federteil 108 von dem ortsfesten Teil 104 ab, so dass eine (flache) Oberfläche 130 beabstandet ist zu der zweiten Fläche 128 des ortsfesten Teils 104. Im Bereich der Oberfläche 130 weist das Federteil 108 insbesondere die gleiche Dicke wie das ortsfeste Teil 104 auf.

Im kraftbeaufschlagten Zustand kann das Federteil 108 in die Durchgangsöffnung 106 eintauchen. Der Kontaktbereich 124 ragt dabei über die Oberfläche 130 hinaus.

Der Verbindungsbereich 118 weist eine Ausnehmung 132 auf, in welcher ein Element der Sensoranordnung 20 wie beispielsweise der Magnet 38 positioniert ist. Dadurch ist dann der Magnet 38 über das Federteil 108 ortsveränderlich gegenüber dem ortsfesten Teil 104.

Das korrespondierende Element der Sensoranordnung 20, in dem erwähnten Beispiel dann der Sensor 36 wie beispielsweise ein Hall-Sensor ist unterhalb der Ausnehmung 132 angeordnet (in Figur 2 nicht gezeigt). Dadurch ist dann über die Bewegung des Federteils 108 der Magnet 38 in einem Raum oberhalb des Sensors 36 beweglich. Insbesondere sind dann der Magnet 38 und der Sensor 36 mindestens näherungsweise fluchtend ausgerichtet mit einer Fluchtrichtung, welche mindestens näherungsweise parallel zur Achse 112 ist. Durch Krafteinleitung verringert sich der Abstand zwischen Magnet 38 und Sensor 36 in der Fluchtrichtung ohne wesentlichen Querversatz. Dadurch wird der Abstand parallel zur Fluchtrichtung zwischen Magnet 38 und Sensor 36 genau erfasst.

Die Ausnehmung 132 ist quer versetzt zu dem Kontaktbereich 124. Entsprechend ist dann die Sensoranordnung mit ihrem Geberelement und ihrem Sensorelement versetzt zu dem Kontaktbereich 124 angeordnet, und zwar in einer Querrichtung bezogen auf die Achse 112 versetzt.

Der Kontaktbereich 124 ist dadurch mittig angeordnet und die Sensoranordnung ist außermittig angeordnet. Dadurch lässt sich der Träger 102 mit der Sensoranordnung sehr flach ausbilden, so dass sich eine Kraftmesszelle mit geringer Höhe bereitstellen lässt.

Das Kontaktelement 110 ist dabei an seinem Ende 134, welches den Kontaktbereich 124 kontaktiert, vorzugsweise flach ausgebildet.

Eine Kraftmesszelle, welche den Träger 102 umfasst, funktioniert ansonsten wie oben beschrieben.

## Patentansprüche

1. Kraftmesszelle mit einem Kraftaufnehmer (17) zur Aufnahme von zu bestimmenden Zug- und Druckkräften, wobei der Kraftaufnehmer (17) ein biegeelastisches Element (14) und ein auf das biegeelastische Element (14) arbeitendes Krafteinleitungsteil (16) aufweist, mit einer Sensoranordnung (20) zur Erfassung einer Verformung des biegeelastischen Elements (14) und deren Umwandlung in ein elektrisches Wägesignal und mit einem den Kraftaufnehmer (17) und die Sensoranordnung (20) aufnehmenden Gehäuse (12) mit einem biegesteifen Wandteil (26), an welchem das biegeelastische Element (14) des Kraftaufnehmers (17) gehalten ist,
**dadurch gekennzeichnet, dass** die Sensoranordnung (20) auf einem separaten Träger (18; 102) angeordnet ist, welcher an dem biegesteifen Wandteil (26) und/oder einem biegesteifen Bodenteilbereich des Gehäuses (12) gehalten ist, dass die Sensoranordnung (20) ein Geberelement (38) und ein Sensorelement (36) umfasst, wobei ein erstes (36; 38) dieser beiden Elemente an dem Träger (18; 102) ortsfest und das zweite (38; 36) dieser Elemente bezüglich dem ersten Element (36; 38) ortsveränderlich an dem Träger (18; 102) gehalten ist, und dass das Krafteinleitungsteil (16) ein Kontaktelement (62) aufweist, welches in mechanischem Kontakt zu der ortsveränderlich am Träger (18) gehaltenen Komponente der Sensoranordnung (20) angeordnet ist.

2. Kraftmesszelle nach Anspruch 1, **dadurch gekennzeichnet, dass** der Träger (18; 102) ausschließlich am biegesteifen Wandteil (26) des Gehäuses (12) gehalten und abgestützt ist.

3. Kraftmesszelle nach Anspruch 1 oder 2, **dadurch gekennzeichnet, dass** das zweite Element (38; 36) an einem Federteil (40; 108) des Trägers (18; 102) gehalten ist.

4. Kraftmesszelle nach einem der Ansprüche 1 bis 3, **dadurch gekennzeichnet, dass** das zweite Element (38; 36) im unbelasteten Zustand des Kraftaufnehmers (17) in einem Neutralpunkt des biegeelastischen Elements (14) angeordnet ist.

5. Kraftmesszelle nach einem der Ansprüche 1 bis 4, **dadurch gekennzeichnet, dass** die Sensoranordnung (20) eine Sensoranordnung zur berührungsfreien Wegmessung ist.

6. Kraftmesszelle nach Anspruch 5, **dadurch gekennzeichnet, dass** die Sensoranordnung (20) eine Hallsensoranordnung ist.

7. Kraftmesszelle nach Anspruch 6, **dadurch gekennzeichnet, dass** die Sensoranordnung (20) eine optische Sensoranordnung ist.

8. Kraftmesszelle nach einem der Ansprüche 1 bis 7, **dadurch gekennzeichnet, dass** das Geber- und/oder das Sensorelement (36; 38) an dem Träger (18; 102) mechanisch gehalten ist.

9. Kraftmesszelle nach einem der Ansprüche 1 bis 8, **dadurch gekennzeichnet, dass** das biegeelastische Element (14) eine biegeelastische Membran umfasst, welche an dem biegesteifen Wandteil (26) des Gehäuses (12) mit ihrem Randbereich gehalten ist.

10. Kraftmesszelle nach Anspruch 9, **dadurch gekennzeichnet, dass** die biegeelastische Membran (14) eine Metallmembran ist.

11. Kraftmesszelle nach Anspruch 9 oder 10, **dadurch gekennzeichnet, dass** die biegeelastische Membran (14) eine mittige Ausnehmung (52) umfasst.

12. Kraftmesszelle nach Anspruch 11, **dadurch gekennzeichnet, dass** die Membran (14) als Ringscheibe ausgebildet ist.

13. Kraftmesszelle nach einem der Ansprüche 1 bis 12, **dadurch gekennzeichnet, dass** das Krafteinleitungsteil (16) und das biegeelastische Element (14) einstückig ausgebildet sind.

14. Kraftmesszelle nach einem der Ansprüche 1 bis 13, **dadurch gekennzeichnet, dass** das Krafteinleitungsteil (16) koaxial in einer Durchgangsöffnung (66) des Gehäuses (12) verschieblich angeordnet ist.

15. Kraftmesszelle nach einem der Ansprüche 1 bis 14, **dadurch gekennzeichnet, dass** das Krafteinleitungsteil (16) ein auf das biegeelastische Element (14) arbeitendes Fußteil (56) aufweist und dass das Kontaktelement (62) gegenüber dem Fußteil (56) verstellbar ist.

16. Kraftmesszelle nach einem der Ansprüche 1 bis 15, **dadurch gekennzeichnet, dass** der mechanische Kontakt des Kontaktelementes (62) mit der ortsveränderlichen Komponente ein im Wesentlichen punktförmiger Kontakt ist.

17. Kraftmesszelle nach einem der Ansprüche 1 bis 16, **dadurch gekennzeichnet, dass** das Kontaktelement (62) eine verrundete Spitze (64) aufweist, über welche der mechanische Kontakt mit der ortsveränderlichen Komponente der Sensoranordnung (26) herstellbar ist.

18. Kraftmesszelle nach Anspruch 17, **dadurch gekennzeichnet, dass** die verrundete Spitze (64) des Kontaktelementes (62) in gleitendem mechanischen Kontakt mit der ortsveränderlich gehaltenen Komponente der Sensoranordnung (20) steht.

19. Kraftmesszelle nach einem der Ansprüche 15 bis 18, **dadurch gekennzeichnet, dass** das Fußteil (58) des Krafteinleitungsteils (16) eine größere radiale Abmessung aufweist als die Durchgangsöffnung (66) des Gehäuses (12).

20. Kraftmesszelle nach einem der Ansprüche 14 bis 19, **dadurch gekennzeichnet, dass** das Krafteinleitungsteil (16) durch die Durchgangsöffnung (66) aus dem Gehäuse (12) herausragt.

21. Kraftmesszelle nach einem der Ansprüche 1 bis 20, **dadurch gekennzeichnet, dass** die Kraftmesszelle Anschlagmittel (68; 58) aufweist, die die Bewegung des Krafteinleitungsteils (16) bei Krafteinwirkung begrenzen.

22. Kraftmesszelle nach Anspruch 21, **dadurch gekennzeichnet, dass** die Anschlagmittel (68; 58) die Bewegung des Krafteinleitungsteils (16) sowohl bei der Einwirkung von Zug- als auch bei Druckkräften begrenzen.

23. Kraftmesszelle nach Anspruch 22, **dadurch gekennzeichnet, dass** die Anschlagmittel ein erstes Element (68) umfassen, welches sich auf der Außenseite des Gehäuses (12) abstützt.

24. Kraftmesszelle nach Anspruch 23, **dadurch gekennzeichnet, dass** das erste Element (68) der Anschlagmittel auf seiner der Außenseite des Gehäuses (12) zugewandten Seite eine Aufnahme (70) für ein Elastomerelement (72) aufweist.

25. Kraftmesszelle nach Anspruch 23 oder 24, **dadurch gekennzeichnet, dass** das erste Element (66) am außerhalb des Gehäuses (12) angeordneten Bereich des Krafteinleitungsteils (16) angeordnet ist.

26. Kraftmesszelle nach einem der Ansprüche 22 bis 25, **dadurch gekennzeichnet, dass** die Anschlagmittel ein zweites Element (58) aufweisen, welches sich an der Innenseite des Gehäuses (12) abstützt.

27. Kraftmesszelle nach Anspruch 26, **dadurch gekennzeichnet, dass** das zweite Element (58) als Fußteil des Krafteinleitungsteils (16) ausgebildet ist.

28. Kraftmesszelle nach einem der Ansprüche 1 bis 27, **dadurch gekennzeichnet, dass** das Gehäuse den Kraftaufnehmer (17) und die Sensoranordnung (20) im Wesentlichen allseitig umschließt.

29. Kraftmesszelle nach einem der Ansprüche 1 bis 28, **dadurch gekennzeichnet, dass** das Gehäuse (12) ein Deckelelement (24), ein Bodenelement (22) und eine das Deckel- mit dem Bodenelement verbindende biegesteife Seitenwand (26) umfasst.

30. Kraftmesszelle nach Anspruch 29, **dadurch gekennzeichnet, dass** das Gehäuse (12) mehrteilig ist.

31. Kraftmesszelle nach Anspruch 30, **dadurch gekennzeichnet, dass** das Gehäuse (12) aus einem Deckelteil (24) und einem Bodenteil (22) gebildet ist.

32. Kraftmesszelle nach Anspruch 30 oder 31, **dadurch gekennzeichnet, dass** die Teile (22, 24) des Gehäuses (12) miteinander verschweißt sind.

33. Kraftmesszelle nach einem der Ansprüche 29 bis 32, **dadurch gekennzeichnet, dass** das Deckelelement (24) die Durchgangsöffnung (66) des Gehäuses (12) zur Aufnahme und Durchführung des Krafteinleitungsteils (16) umfasst.

34. Kraftmesszelle nach einem der Ansprüche 1 bis 33, **dadurch gekennzeichnet, dass** das Gehäuse eine Durchgangsöffnung für elektrische Versorgungs- und/oder Signalleitungen umfasst.

35. Kraftmesszelle nach einem der Ansprüche 29 bis 34, **dadurch gekennzeichnet, dass** das Bodenelement (22) ein oder mehrere Befestigungselemente (74) aufweist.

36. Kraftmesszelle nach Anspruch 35, **dadurch gekennzeichnet, dass** an dem Bodenelement ein Gewindeteil (74) ausgebildet ist.

37. Kraftmesszelle nach Anspruch 36, **dadurch gekennzeichnet, dass** das Gewindeteil (74) einstückig mit dem Bodenelement (22) ausgebildet ist.

38. Kraftmesszelle nach einem der Ansprüche 31 bis 37, **dadurch gekennzeichnet, dass** das biegeelastische Element (14) zwischen zwei Gehäuseteilen (22, 24) im Klemmsitz gehalten ist.

39. Kraftmesszelle nach einem der Ansprüche 1 bis 37, **dadurch gekennzeichnet, dass** das biegeelastische Element (14) mit dem Gehäuse (12) mittels einer Schweißstelle verbunden ist.

40. Kraftmesszelle nach einem der Ansprüche 1 bis 39, **dadurch gekennzeichnet, dass** der Träger (18; 102) mit dem Gehäuse (12) stoffschlüssig verbunden ist.

41. Kraftmesszelle nach einem der Ansprüche 10 bis 40, **dadurch gekennzeichnet, dass** die Durchgangsöffnung (66) des Gehäuses (12) als Führung für das Krafteinleitungsteil (16) ausgebildet ist.

42. Kraftmesszelle nach Anspruch 41, **dadurch gekennzeichnet, dass** die Durchgangsöffnung (66) des Gehäuses (12) das Krafteinleitungsteil (16) gegen Kippmomente gesichert führt.

43. Kraftmesszelle nach einem der Ansprüche 10 bis 42, **dadurch gekennzeichnet, dass** zwischen dem Krafteinleitungsteil (16) und der Durchgangsöffnung (66) ein Spalt vorhanden ist, der eine Breite von ca. 0,1 mm bis ca. 0,5 mm aufweist.

44. Kraftmesszelle nach einem der Ansprüche 1 bis 43, **dadurch gekennzeichnet, dass** das Geberelement (38) und das Sensorelement (36) außermittig am Träger (102) angeordnet sind.

45. Kraftmesszelle nach Anspruch 44, **dadurch gekennzeichnet, dass** das erste Element (36; 38) unterhalb des zweiten Elements (38; 36) angeordnet ist, wobei das zweite Element (38; 36) in einem Raum oberhalb des ersten Elements (36; 38) beweglich ist.

46. Kraftmesszelle nach Anspruch 44 oder 45, **dadurch gekennzeichnet, dass** der Träger (102) eine Ausnehmung (132) aufweist, in welcher das zweite Element (38; 36) angeordnet ist.

47. Kraftmesszelle nach Anspruch 46, **dadurch gekennzeichnet, dass** die Ausnehmung (132) an einem Federteil (108) des Trägers (102) gebildet ist.

48. Kraftmesszelle nach einem der Ansprüche 44 bis 47, **dadurch gekennzeichnet, dass** das Geberelement (38) und das Sensorelement (36) quer versetzt zu einer Achse (112) eines Kontaktelements (110) angeordnet sind.

49. Kraftmesszelle nach einem der vorangehenden Ansprüche, **dadurch gekennzeichnet, dass** der Träger (102) einen Kontaktbereich (124) aufweist, welcher konkav ausgebildet ist.

50. Kraftmesszelle nach Anspruch 49, **dadurch gekennzeichnet, dass** der Kontaktbereich (124) zwischen beabstandeten Federstegen (114, 116) angeordnet ist.

51. Kraftmesszelle nach einem der vorangehenden Ansprüche, **dadurch gekennzeichnet, dass** ein Federteil (108) beabstandete Federstege (114, 116) aufweist, welche jeweils mit beabstandeten Schwächungszonen (120a, 122a; 120b, 122b) versehen sind.

52. Kraftmesszelle nach Anspruch 51, **dadurch gekennzeichnet, dass** korrespondierende Schwächungszonen (120a, 120b; 122a, 122b) unterschiedlicher Federstege (114, 116) auf gleicher Höhe liegen.

53. Kraftmesszelle nach einem der vorangehenden Ansprüche, **dadurch gekennzeichnet, dass** der Träger (18; 102) zwischen zwei Gehäuseteilen (22, 24) im Klemmsitz gehalten ist.

## Claims

1. Load cell comprising a force transducer (17) for recording tensile and compressive forces to be determined, wherein the force transducer (17) has a flexible element (14) and a force introduction part (16) acting on the flexible element (14), comprising a sensor arrangement (20) for detecting a deformation of the flexible element (14) and the transformation thereof into an electric weighing signal and comprising a housing (12) receiving the force transducer (17) and the sensor arrangement (20) with a rigid wall part (26), on which the flexible element (14) of the force transducer (17) is held, **characterised in that** the sensor arrangement (20) is arranged on a separate carrier (18; 102), which is held on the rigid wall part (26) and/or a rigid base part region of the housing (12), **in that** the sensor arrangement (20) comprises a transmitter element (38) and a sensor element (36), a first (36; 38) of these two elements being held stationarily on the carrier (18; 102) and the second (38; 36) of these elements being held movably on the carrier (18; 102) with respect to the first element (36; 38), and **in that** the force introduction part (16) comprises a contact element (62), which is arranged in mechanical contact with the component of the sensor arrangement (20) held movably on the carrier (18).

2. Load cell according to claim 1, **characterised in that** the carrier (18; 102) is held and supported exclusively on the rigid wall part (26) of the housing (12).

3. Load cell according to claim 1 or 2, **characterised in that** the second element (38; 36) is held on a spring part (40; 108) of the carrier (18; 102).

4. Load cell according to any one of claims 1 to 3, **characterised in that** the second element (38; 36) is arranged in a neutral point of the flexible element (14) in the unloaded state of the force transducer (17).

5. Load cell according to any one of claims 1 to 4, **characterised in that** the sensor arrangement (20) is a sensor arrangement for contact-free path measurement.

6. Force transducer according to claim 5, **characterised in that** the sensor arrangement (20) is a Hall sensor arrangement.

7. Load cell according to claim 6, **characterised in that** the sensor arrangement (20) is an optical sensor arrangement.

8. Load cell according to any one of claims 1 to 7, **characterised in that** the transmitter element and/or the sensor element (36; 38) is mechanically held on the carrier (18; 102).

9. Load cell according to any one of claims 1 to 8, **characterised in that** the flexible element (14) comprises a flexible membrane, which is held on the rigid wall part (26) of the housing (12) by its edge region.

10. Load cell according to claim 9, **characterised in that** the flexible membrane (14) is a metal membrane.

11. Load cell according to claim 9 or 10, **characterised in that** the flexible membrane (14) has a central recess (52).

12. Load cell according to claim 11, **characterised in that** the membrane (14) is configured as an annular disc.

13. Load cell according to any one of claims 1 to 12, **characterised in that** the force introduction part (16) and the flexible element (14) are configured in one piece.

14. Load cell according to any one of claims 1 to 13, **characterised in that** the force introduction part (16) is displaceably arranged coaxially in a through-opening (66) of the housing (12).

15. Load cell according to any one of claims 1 to 14, **characterised in that** the force introduction part (16) has a foot part (56) acting on the flexible element (14) and **in that** the contact element (62) can be adjusted relative to the foot part (56).

16. Load cell according to any one of claims 1 to 15, **characterised in that** the mechanical contact of the contact element (62) with the movable component is a substantially point-wise contact.

17. Load cell according to any one of claims 1 to 16, **characterised in that** the contact element (62) has a rounded tip (64), by means of which the mechanical contact with the movable component of the sensor arrangement (26) can be produced.

18. Load cell according to claim 17, **characterised in that** the rounded tip (64) of the contact element (62) is in scovering mechanical contact with the movably held component of the sensor arrangement (20).

19. Load cell according to any one of claims 15 to 18, **characterised in that** the foot part (58) of the force introduction part (16) has a larger radial dimension than the through-opening (66) of the housing (12).

20. Load cell according to any one of claims 14 to 19, **characterised in that** the force introduction part (16) projects out of the housing (12) through the through-opening (66).

21. Load cell according to any one of claims 1 to 20, **characterised in that** the load cell has stop means (68; 58), which limit the movement of the force introduction part (16) upon the action of force.

22. Load cell according to claim 21, **characterised in that** the stop means (68, 58) limit the movement of the force introduction part (16) upon the action of tensile forces and also compressive forces.

23. Load cell according to claim 22, **characterised in that** the stop means comprise a first element (68), which is supported on the outside of the housing (12).

24. Load cell according to claim 23, **characterised in that** the first element (68) of the stop means has a receiver (70) for an elastomer element (72) on its side facing the outside of the housing (12).

25. Load cell according to claim 23 or 24, **characterised in that** the first element (66) is arranged on the region of the force introduction part (16) arranged outside the housing (12).

26. Load cell according to any one of claims 22 to 25, **characterised in that** the stop means comprise a second element (58), which is supported on the inside of the housing (12).

27. Load cell according to claim 26, **characterised in that** the second element (58) is configured as a foot part of the force introduction part (16).

28. Load cell according to any one of claims 1 to 27, **characterised in that** the housing substantially surrounds the force transducer (17) and the sensor arrangement (20) on all sides.

29. Load cell according to any one of claims 1 to 28, **characterised in that** the housing (12) comprises a cover element (24), a base element (22) and a rigid side wall (26) connecting the cover element to the base element.

30. Load cell according to claim 29, **characterised in that** the housing (12) is multipart.

31. Load cell according to claim 30, **characterised in that** the housing (12) is formed from a cover part (24) and a base part (22).

32. Load cell according to claim 30 or 31, **characterised in that** the parts (22, 24) of the housing (12) are welded to one another.

33. Load cell according to any one of claims 29 to 32, **characterised in that** the cover element (24) surrounds the through-opening (66) of the housing (12) to receive and guide through the force introduction part (16).

34. Load cell according to any one of claims 1 to 33, **characterised in that** the housing comprises a through-opening for electrical supply lines and/or signal lines.

35. Load cell according to any one of claims 29 to 34, **characterised in that** the base element (22) has one or more fastening elements (74).

36. Load cell according to claim 35, **characterised in that** a threaded part (74) is configured on the base element.

37. Load cell according to claim 36, **characterised in that** the threaded part (74) is configured in one piece with the base element (22).

38. Load cell according to any one of claims 31 to 37, **characterised in that** the flexible element (14) is held between two housing parts (22, 24) with a force fit.

39. Load cell according to any one of claims 1 to 37, **characterised in that** the flexible element (14) is connected to the housing (12) by means of a weld point.

40. Load cell according to any one of claims 1 to 39, **characterised in that** the carrier (18; 102) is connected to the housing (12) with a material connection.

41. Load cell according to any one of claims 10 to 40, **characterised in that** the through-opening (66) of the housing (12) is configured as a guide for the force introduction part (16).

42. Load cell according to claim 41, **characterised in that** the through-opening (66) of the housing (12) guides the force introduction part (16) so as to be secured against tilting moments.

43. Load cell according to any one of claims 10 to 42, **characterised in that** a gap, which has a width of about 0.1 mm to about 0.5 mm, is present between the force introduction part (16) and the through-opening (66).

44. Load cell according to any one of claims 1 to 43, **characterised in that** the transmitter element (38) and the sensor element (36) are arranged non-centrally on the carrier (102).

45. Load cell according to claim 44, **characterised in that** the first element (36; 38) is arranged below the second element (38; 36), the second element (38; 36) being movable in a space above the first element (36; 38).

46. Load cell according to claim 44 or 45, **characterised in that** the carrier (102) has a recess (132), in which the second element (38; 36) is arranged.

47. Load cell according to claim 46, **characterised in that** the recess (132) is formed on a spring part (108) of the carrier (102).

48. Load cell according to any one of claims 44 to 47, **characterised in that** the transmitter element (38) and the sensor element (36) are arranged transversely offset with respect to an axis (112) of a contact element (110).

49. Load cell according to any one of the preceding claims, **characterised in that** the carrier (102) has a contact region (124), which is concave.

50. Load cell according to claim 49, **characterised in that** the contact region (124) is arranged between spaced-apart spring webs (114, 116).

51. Load cell according to any one of the preceding claims, **characterised in that** a spring part (108) has spaced-apart spring webs (114, 116), which are provided in each case with spaced-apart weakening zones (120a, 122a; 120b, 122b).

52. Load cell according to claim 51, **characterised in that** corresponding weakening zones (120a, 120b; 122a, 122b) of different spring webs (114, 116) are located at the same height

53. Load cell according to any one of the preceding claims, **characterised in that** the carrier (18; 102) is held between two housing parts (22, 24) with a force fit.

## Revendications

1. Cellule de mesure de force comprenant un capteur de force (17) pour capter des forces de traction et de compression à déterminer, le capteur de force (17) présentant un élément élastique en flexion (14) et une pièce d'application de force (16) agissant sur l'élément élastique en flexion (14), la cellule comprenant également un agencement de détection (20) destiné à relever une déformation de l'élément élastique en flexion (14) et sa conversion en un signal électrique pondéré, et comprenant en définitive un carter ou boitier (12), qui reçoit le capteur de force (17) et l'agencement de détection (20), et comporte une partie de paroi (26) rigide en flexion sur laquelle est maintenu l'élément élastique en flexion (14) du capteur de force (17),
**caractérisée en ce que** l'agencement de détection (20) est disposé sur un support séparé (18 ; 102) qui est maintenu sur la partie de paroi (26) rigide en flexion et/ou sur une zone rigide en flexion de la partie de fond du boitier (12), **en ce que** l'agencement de détection (20) comprend un élément transmetteur (38) et un élément détecteur (36), un premier (36 ; 38) de ces deux éléments étant maintenu sur le support (18 ; 102) en position fixe et le deuxième (38 ; 36) de ces éléments étant maintenu en position variable par rapport au premier élément (36 ; 38), et **en ce que** la pièce d'application de force (16) présente un élément de contact (62), qui est disposé de manière à être en contact mécanique avec le composant de l'agencement de détection (20), qui est maintenu en position variable sur le support (18).

2. Cellule de mesure de force selon la revendication 1,
**caractérisée en ce que** le support (18 ; 102) est maintenu et est en appui exclusivement sur la partie de paroi (26) rigide en flexion du boitier (12).

3. Cellule de mesure de force selon la revendication 1 ou la revendication 2,
**caractérisée en ce que** le deuxième élément (38 ; 36) est maintenu sur une pièce à élasticité de ressort (40 ; 108) du support (18 ; 102).

4. Cellule de mesure de force selon l'une des revendications 1 à 3,
**caractérisée en ce que** le deuxième élément (38 ; 36), dans l'état non chargé du capteur de force (17), est agencé en un point neutre de l'élément élastique en flexion (14).

5. Cellule de mesure de force selon l'une des revendications 1 à 4,
**caractérisée en ce que** l'agencement de détection (20) est un agencement de détection pour la mesure de déplacement sans contact.

6. Cellule de mesure de force selon la revendication 5,
**caractérisée en ce que** l'agencement de détection (20) est un agencement à détecteur de Hall.

7. Cellule de mesure de force selon la revendication 6,
**caractérisée en ce que** l'agencement de détection (20) est un agencement de détection optique.

8. Cellule de mesure de force selon l'une des revendications 1 à 7,
**caractérisée en ce que** l'élément transmetteur et/ou détecteur (36 ; 38) est maintenu mécaniquement sur le support (18 ; 102).

9. Cellule de mesure de force selon l'une des revendications 1 à 8,
**caractérisée en ce que** l'élément élastique en flexion (14) comprend une membrane élastique en flexion, qui est maintenue, avec sa zone de bordure, sur la partie de paroi (26) rigide en flexion du boitier (12).

10. Cellule de mesure de force selon la revendication 9,
**caractérisée en ce que** la membrane élastique en flexion (14) est une membrane métallique.

11. Cellule de mesure de force selon la revendication 9 ou la revendication 10,
**caractérisée en ce que** la membrane élastique en flexion (14) comprend un évidement central (52).

12. Cellule de mesure de force selon la revendication 11,
**caractérisée en ce que** la membrane (14) est réalisée sous forme de disque annulaire.

13. Cellule de mesure de force selon l'une des revendications 1 à 12,
**caractérisée en ce que** la pièce d'application de force (16) et l'élément élastique en flexion (14) sont réalisés d'un seul tenant.

14. Cellule de mesure de force selon l'une des revendications 1 à 13,
**caractérisée en ce que** la pièce d'application de force (16) est agencée de manière coulissante, coaxialement dans une ouverture de passage (66) du boitier (12).

15. Cellule de mesure de force selon l'une des revendications 1 à 14,
**caractérisée en ce que** la pièce d'application de force (16) présente une partie de base (56) agissant sur l'élément élastique en flexion (14), et **en ce que** l'élément de contact (62) est réglable par rapport à la partie de base (56).

16. Cellule de mesure de force selon l'une des revendications 1 à 15,
**caractérisée en ce que** le contact mécanique de l'élément de contact (62) avec le composant de position variable, est un contact sensiblement en forme de point.

17. Cellule de mesure de force selon l'une des revendications 1 à 16,
**caractérisée en ce que** l'élément de contact (62) présente une pointe arrondie (64), par l'intermédiaire de laquelle peut être établi le contact mécanique avec le composant de position variable de l'agencement de détection (20).

18. Cellule de mesure de force selon la revendication 17,
**caractérisée en ce que** la pointe arrondie (64) de l'élément de contact (62) est en contact mécanique glissant avec le composant maintenu en position variable de l'agencement de détection (20).

19. Cellule de mesure de force selon l'une des revendications 15 à 18,
**caractérisée en ce que** la partie de base (58) de la pièce d'application de force (16) présente une dimension radiale plus grande que l'ouverture de passage (66) du boitier (12).

20. Cellule de mesure de force selon l'une des revendications 14 à 19,
**caractérisée en ce que** la pièce d'application de force (16) fait saillie hors du boitier (12), à travers l'ouverture de passage (66).

21. Cellule de mesure de force selon l'une des revendications 1 à 20,
**caractérisée en ce que** la cellule de mesure de force comprend des moyens de butée (68 ; 58) qui limitent le mouvement de la pièce d'application de force (16) lors de l'action de la force.

22. Cellule de mesure de force selon la revendication 21,
**caractérisée en ce que** les moyens de butée (68 ; 58) limitent le mouvement de la pièce d'application de force (16) aussi bien lors de l'action de forces de traction que de forces de compression.

23. Cellule de mesure de force selon la revendication 22,
**caractérisée en ce que** les moyens de butée comprennent un premier élément (68), qui s'appuie sur le côté extérieur du boitier (12).

24. Cellule de mesure de force selon la revendication 23,
**caractérisée en ce que** le premier élément (68) des moyens de butée présente, sur son côté dirigé vers le côté extérieur du boitier (12), un logement (70) pour un élément en élastomère (72).

25. Cellule de mesure de force selon la revendication 23 ou la revendication 24,
**caractérisée en ce que** le premier élément (68) est agencé sur la partie de la pièce d'application de force (16) se trouvant à l'extérieur du boitier (12).

26. Cellule de mesure de force selon l'une des revendications 22 à 25,
**caractérisée en ce que** les moyens de butée comprennent un deuxième élément (58), qui s'appuie sur le côté intérieur du boitier (12).

27. Cellule de mesure de force selon la revendication 26,
**caractérisée en ce que** le deuxième élément (58) est réalisé en tant que partie de base de la pièce d'application de force (16).

28. Cellule de mesure de force selon l'une des revendications 1 à 27,
**caractérisée en ce que** le boitier entoure sensiblement de toutes parts le capteur de force (17) et l'agencement de détection (20).

29. Cellule de mesure de force selon l'une des revendications 1 à 28,
**caractérisée en ce que** le boitier (12) présente un élément de couvercle (24), un élément de fond (22) et une paroi latérale (26) rigide en flexion, qui relie l'élément de couvercle à l'élément de fond.

30. Cellule de mesure de force selon la revendication 29,
**caractérisée en ce que** le boitier (12) est en plusieurs pièces.

31. Cellule de mesure de force selon la revendication 30,
**caractérisée en ce que** le boitier (12) est formé par une pièce de couvercle (24) et une pièce de fond (22).

32. Cellule de mesure de force selon la revendication 30 ou la revendication 31,
**caractérisée en ce que** les pièces (22, 24) du boitier (12) sont soudées l'une à l'autre.

33. Cellule de mesure de force selon l'une des revendications 29 à 32,
**caractérisée en ce que** l'élément de couvercle (24) présente l'ouverture de passage (66) du boitier (12), pour recevoir et faire traverser la pièce d'application de force (16).

34. Cellule de mesure de force selon l'une des revendications 1 à 33,
**caractérisée en ce que** le boitier présente une ouverture de passage pour des lignes ou conducteurs d'alimentation électrique et/ou de transmission de signal.

35. Cellule de mesure de force selon l'une des revendications 29 à 34,
**caractérisée en ce que** l'élément de fond (22) présente un ou plusieurs éléments de fixation (74).

36. Cellule de mesure de force selon la revendication 35,
**caractérisée en ce que** sur l'élément de fond est réalisée une partie filetée (74).

37. Cellule de mesure de force selon la revendication 36,
**caractérisée en ce que** la partie filetée (74) est réalisée d'un seul tenant avec l'élément de fond (22).

38. Cellule de mesure de force selon l'une des revendications 31 à 37,
**caractérisée en ce que** l'élément élastique en flexion (14) est maintenu selon un ajustement serré entre deux pièces de boitier (22, 24).

39. Cellule de mesure de force selon l'une des revendications 1 à 37,
**caractérisée en ce que** l'élément élastique en flexion (14) est relié au boitier (12) au moyen d'une zone soudée.

40. Cellule de mesure de force selon l'une des revendications 1 à 39,
**caractérisée en ce que** le support (18 ; 102) est relié au boitier (12) par continuité de matière.

41. Cellule de mesure de force selon l'une des revendications 10 à 40,
**caractérisée en ce que** l'ouverture de passage (66) du boitier (12) est réalisée en tant que guidage pour la pièce d'application de force (16).

42. Cellule de mesure de force selon la revendication 41,
**caractérisée en ce que** l'ouverture de passage (66) du boitier (12) guide la pièce d'application de force (16) de manière sécurisée à l'encontre de moments de basculement.

43. Cellule de mesure de force selon l'une des revendications 10 à 42,
**caractérisée en ce qu'**entre la pièce d'application de force (16) et l'ouverture de passage (66) existe un interstice d'une largeur d'environ 0,1 mm à environ 0,5 mm.

44. Cellule de mesure de force selon l'une des revendications 1 à 43,
**caractérisée en ce que** l'élément transmetteur (38) et l'élément détecteur (36) sont agencés de manière non centrée sur le support (102).

45. Cellule de mesure de force selon la revendication 44,
**caractérisée en ce que** le premier élément (36 ; 38) est agencé en-dessous du deuxième élément (38 ; 36), le deuxième élément (38 ; 36) étant mobile dans un espace au-dessus du premier élément (36 ; 38).

46. Cellule de mesure de force selon la revendication 44 ou la revendication 45,
**caractérisée en ce que** le support (102) présente un évidement (132) dans lequel est agencé le deuxième élément (38 ; 36).

47. Cellule de mesure de force selon la revendication 46,
**caractérisée en ce que** l'évidement (132) est formé sur une partie présentant une élasticité de ressort (108) du support (102).

48. Cellule de mesure de force selon l'une des revendications 44 à 47,
**caractérisée en ce que** l'élément transmetteur (38) et l'élément détecteur (36) son agencés de manière décalée transversalement par rapport à un axe (112) d'un élément de contact (110).

49. Cellule de mesure de force selon l'une des revendications précédentes,
**caractérisée en ce que** le support (102) présente une zone de contact (124), qui est de configuration concave.

50. Cellule de mesure de force selon la revendication 49,
**caractérisée en ce que** la zone de contact (124) est agencée entre deux nervures élastiques de ressort (114, 116) mutuellement espacées.

51. Cellule de mesure de force selon l'une des revendications précédentes,
**caractérisée en ce qu'**une pièce élastique de ressort (108) présente des nervures élastiques de ressort (114, 116) mutuellement espacées, qui sont pourvues chacune de zones d'affaiblissement respectives (120a, 122a ; 120b, 122b) mutuellement espacées.

52. Cellule de mesure de force selon la revendication 51,
**caractérisée en ce que** des zones d'affaiblissement (120a, 120b ; 122a, 122b) correspondantes de nervures élastiques de ressort différentes (114, 116) se situent à même hauteur.

53. Cellule de mesure de force selon l'une des revendications précédentes,
**caractérisée en ce que** le support (18 ; 102) est maintenu selon un ajustement serré entre deux pièces de boitier (22, 24).
